# EUROPÄISCHE PATENTSCHRIFT

(11) **EP 2 097 341 B1**
(45) Veröffentlichungstag und Bekanntmachung des Hinweises auf die Patenterteilung: **27.10.2010**
(21) Anmeldenummer: 07846542.4
(22) Anmeldetag: 08.11.2007
(51) Int. Cl.: B65G 29/00, B65G 47/84, B67C 3/24

(54) **VORRICHTUNG ZUM BEHÄLTERTRANSPORT MIT EINER ROTIERENDEN EINLAUFSCHEIBE**
DEVICE FOR CONTAINER TRANSPORT HAVING A ROTATING INFEED DISK
DISPOSITIF DE TRANSPORT DE RÉCIPIENT AVEC UN PLATEAU D'ADMISSION ROTATIF

(30) Priorität: 23.11.2006 DE 102006055317
(43) Veröffentlichungstag der Anmeldung: 09.09.2009
(73) Patentinhaber: KHS GmbH, Juchostrasse 20 44143 Dortmund (DE)
(72) Erfinder: BERNHARD, Herbert, 55578 Wolfsheim (DE)
(86) Internationale Anmeldenummer: PCT/EP2007/009691
(87) Internationale Veröffentlichungsnummer: WO 2008/061637

(56) Entgegenhaltungen:
- WO-A-01/62636

## Beschreibung

Die Erfindung betrifft eine Vorrichtung zum Behältertransport nach dem Oberbegriff des Patentanspruches 1.

Derartige Vorrichtungen dienen dazu, Behälter, beispielsweise PET-Flaschen in der Getränkeindustrie, einer Behälterbehendlungsanlage, beispielsweise einer Getränkefüllanlage, zuzuführen. Die Behälter werden dabei in ihrem Kopfbereich, im Falle der PET-Flaschen, am umlaufenden Kragen unterhalb der Flaschenöffnung, beispielsweise über Luftfördersysteme an der Behälterbehandlungsmaschine angeliefert. Dort müssen sie auf eine ausreichende Geschwindigkeit zum Einspeisen in die Behandlungsmaschine beschleunigt werden. Dies geschieht nach dem Stand der Technik durch Einlaufscheiben, die die Flasche im Kopfbereich erfassen und durch Mitnehmen über einen Teilkrels-Drehbereich beschleunigen. Dort werden die Flaschen dann von einem nachfolgenden Transportsystem mit der erhöhten Geschwindigkeit übernommen und der Maschine zugeführt.

Derartige Einlaufscheiben bieten viele Vorteile. Insbesondere ist durch die Führung im Kopfbereich ein sicherer und über weite Bereiche von der Flaschengröße unabhängiger Transport der Flasche möglich.

Nachteilig an den bekannten Lösungen ist allerdings, dass die Flaschen nicht immer sicher und störungsfrei transportiert werden, insbesondere, wenn hohe Beschleunigungen und hohe Durchsatzraten zu erzielen sind. Dabei kommt es immer wieder vor, dass die Flaschen sich verkanten oder verkellen. Zur Kompensation der Fliehkräfte und Behandlung von Flaschen mit unterschiedlicher Größe, wird in der WO 2001/62636 A1 vorgeschlagen, einen höhenverstellbaren, radial innen liegenden Anschlag im Bauchbereich vorzusehen. Weiterhin schlägt die WO 2001/62636 A1 vor, im unteren Randbereich, d.h. am Übergang zwischen zylindrischer Behälterwand und Bodenbereich, radial außen eine schräge Anschlagsfläche bereit zu stellen. Diese Anschlagselemente erschweren die Ein- und Ausleitung der Behälter einer derartigen Einlaufscheibe.

Aufgabe der Erfindung ist es, die bekannten Transportvorrichtungen dahingehend zu verbessern, dass die Transportsicherheit auch bei hohen Durchsatzgeschwindigkeiten und Beschleunigungen verbessert werden kann.

Die Erfindung erreicht dies mit einer Vorrichtung mit den Merkmalen des Patentanspruches 1.

Eine mitrotierende Führungseinrichtung ist vorgesehen, die den Behälter neben seiner Erfassung im Kopfbereich zusätzlich seitlich und/oder im unteren Bereich führt und/oder stützt. Durch das Mitrotieren der Führungseinrichtung wird verhindert, dass sich der Behälter durch eine alleinige, ausschließlich im Kopfbereich angreifende Kraft und die, daraus resultierenden Beschleunigungen und Trägheitskräfte schräg stellt und verkeilt. Vielmehr wird der Behälter gleichmäßig über seine gesamte Höhe angetrieben und beschleunigt. So wird auch für beispielsweise große PET-Flaschen ein sicherer Transport gewährleistet.

Weitere Vorteile der Erfindung ergeben sich aus den Unteransprüchen.

In unterschiedlichen Ausgestaltungen der Erfindung kann die vorgesehene Führungseinrichtung zusätzliche Aufgaben übernehmen. So kann sie den Behälter beim Transportvorgang führen, stützen, zusätzlich antreiben oder vor dem Herausfallen nach unten aus der Vorrichtung sichern.

Vorteilhaft ist die Führungseinrichtung so ausgebildet, dass sie den Behälter an einem seitlich unteren Bereich erfasst. Ggf. kann alternativ oder zusätzlich auch eine Erfassung im Bodenbereich zweckmäßig sein.

In einer vorteilhaften Ausgestaltung weist die Führungseinrichtung einen Spurkranz auf, der die Flaschen erfasst und transportiert. Alternativ oder zusätzlich kann die Führungseinrichtung auch einen Boden aufweisen, der den Behälter im Bodenbereich erfasst.

Dabei ist die Führungseinrichtung in Ausgestaltung beispielsweise über Stehbolzen mit der Einlaufscheibe verbunden, was eine besonders einfache und zweckmäßige Realisierung ermöglicht. So wird automatisch auch dafür gesorgt, dass die Führungseinrichtung zusammen mit der Einlaufscheibe rotiert und so eine gleichmäßige Führung des Behälters über seine gesamte Länge möglich ist.

Ggf. kann es vorteilhaft sein, wenn die Führungseinrichtung in ihrer Höhe und/oder ihrem Durchmesser verstellbar ist. Dies ist dann zweckmäßig, wenn mit der Anlage und damit der erfindungsgemäßen Vorrichtung Behälter unterschiedlicher Dimensionen verarbeitet werden sollen. Durch eine alleinige Führung im Kopfbereich sind die Anlagen im Grunde genommen unabhängig von der Größe des sich darunter erstreckenden Behälters. Um dies auch mit der erfindungsgemäßen Vorrichtung zu realisieren, ist es sinnvoll, die Führungseinrichtung entsprechend verstellbar zu gestalten, so dass eine sichere Führung und damit ein sicherer Transport auch mit Behältern der unterschiedlichen Größen erfolgen kann.

Weitere Vorteile und Merkmale der Erfindung ergeben sich aus den beigefügten Zeichnungen. Diese zeigen in
- Fig. 1: eine dreidimensionale Seitenansicht einer Vorrichtung zum Behältertransport nach dem Stand der Technik sowie in
- Fig. 2: eine Seitenansicht der erfindungsgemäßen Vorrichtung.

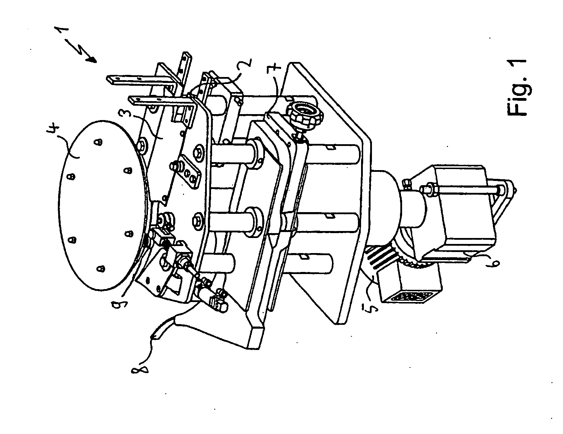

Eine allgemein mit 1 bezeichnete Vorrichtung zum Behältertransport nach dem Stand der Technik, wie sie in Fig. 1 näher dargestellt ist, wird seitlich an der Übergabestelle 2 mit den zu transportierenden Behältern 9, beispielsweise PET-Flaschen für Getränke, versorgt. Diese werden durch Eingriff in ihren Kopfbereich transportiert, beispielsweise über nicht dargestellte Lufttransportsysteme. Der Kopf des Behälters 9 wird nach der Übergabe an der Übergabestelle 2 durch eine Führungsschiene 3 zu einer rotierenden Einlaufscheibe 4 bewegt. Diese wird von einem Elektromotor 5 mit Getriebe 6 gedreht. Die Einlaufscheibe 4 erfasst die Behälter 9 in ihrem Kopfbereich und beschleunigt sie, so dass sie nach einer Teildrehung der Einlaufscheibe 4 an die dahinter befindliche, nicht näher dargestellte nächste Behandlungsstation übergeben werden können. Eine feststehende Anschlagführung 7 mit auslaufender Anschlagleiste 8 stützt den nach unten hängenden Behälter seitlich während des Transportes.

Auf diese Weise wird jeder Behälter 9 auf die zum Einlauf in die dahinter befindliche Maschine nötige Geschwindigkeit beschleunigt.

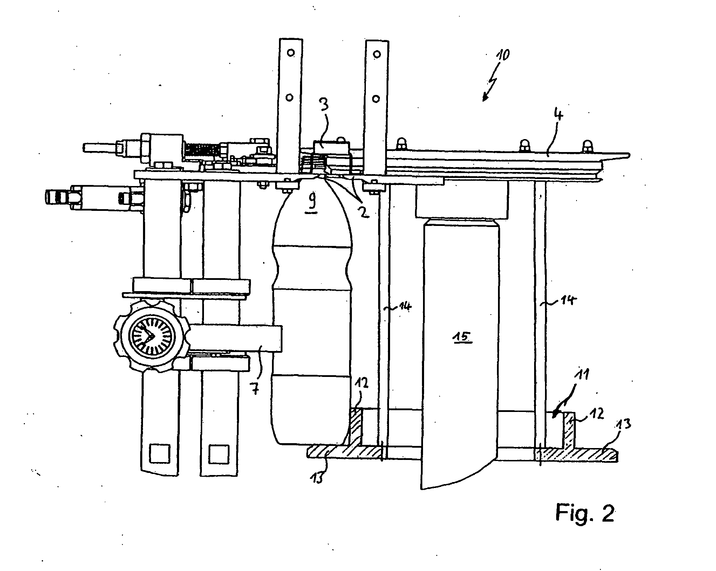

Die erfindungsgemäße Vorrichtung 10, die in Fig. 2 näher dargestellt ist, weist ebenfalls die Übergabestelle 2, die Führungsschiene 3 und die rotierende Einlaufscheibe 4 auf, deren Antrieb in Fig. 2 nicht näher dargestellt ist und analog dem in Fig. 1 gezeigten aufgebaut ist.

Die feststehende Anschlagführung 7 und die nicht erkennbare Anschlagleiste 8 sind ebenfalls vorhanden.

Zusätzlich weist die erfindungsgemäße Vorrichtung eine Führungseinrichtung 11 auf. Sie ist in Form eines Spurkranzes 12 ausgebildet, der so ausgebaut ist, dass er den Behälter 9 in seinem unteren seitlichen Bereich zur Rotationsachse 15 hin abstützt. Des Weiteren weist die Führungseinrichtung 11 einen ringförmigen Boden 13 auf, der die Behälter 9 nach unten hin abstützt.

Die Führungseinrichtung 11 ist über Stehbolzen 14 mit der Einlaufscheibe 4 verbunden und rotiert somit mit dieser mit.

Auf diese Weise werden eine Vielzahl von Vorteilen erzielt. Insbesondere dienen der Spurkranz 12 und Boden 13 dazu, den Behälter 9 bei der Rotation und dabei erfolgenden Beschleunigung zu führen und nach unten abzustützen. Außerdem treiben sie den Behälter 9 zusätzlich an. Somit wird vermieden, dass sich der Behälter 9 aufgrund der im Stand der Technik nur im Kopfbereich erfolgenden Beschleunigung schräg stellt. Zusätzlich wird ein Herausfallen des Behälters 9 nach unten durch die Abstützung verhindert. Behälter, die nicht vollkommen senkrecht, sondern in unterschiedlichen Schräglagen an der Übergabestelle 2 angeliefert werden, werden durch die Führungseinrichtung 11 aufgerichtet und somit in einer aufrechten Lage in die danachfolgende Behandlungsmaschine eingebracht. Die Störungsanfälligkeit der Gesamtanlage wird so deutlich reduziert.

In einer nicht näher dargestellten Ausgestaltung der Erfindung sind sowohl die Stehbolzen 14 als auch die Führungseinrichtung 11 verstellbar ausgebildet, so dass der Abstand zur Einlaufscheibe 4 und der Durchmesser des Spurkranzes 12 veränderbar sind. Auf diese Weise lässt sich die Gesamtanlage einfach an unterschiedliche Größen der zu behandelnden Behälter 9 anpassen.

Die Erfindung ist nicht auf das vorstehende Ausführungsbeispiel beschränkt, sondern kann in vielfältiger Hinsicht abgewandelt werden, ohne den Grundgedanken zu verlassen. Die Dimensionen und Ausgestaltungen der Führungseinrichtung sowie der Befestigung mit der Einlaufscheibe sind den Gegebenheiten und Anforderungen anpassbar. Dasselbe gilt für die verwendeten Materialien. Selbstverständlich ist es auch möglich, die Führungseinrichtung separat anzutreiben oder durch zusätzliche Führungselemente, beispielsweise für den Außenbereich der Behälter, zu ergänzen.

### Bezugszeichenliste

- 1: Vorrichtung zum Behältertransport nach dem Stand der Technik
- 2: Übergabestelle
- 3: Führungsschiene
- 4: Einlaufscheibe
- 5: Elektromotor
- 6: Getriebe
- 7: Anschlagführung
- 8: Anschlagleiste
- 9: Behälter
- 10: erfindungsgemäße Vorrichtung
- 11: Führungseinrichtung
- 12: Spurkranz
- 13: Boden
- 14: Stehbolzen
- 15: Rotationsachse

## Patentansprüche

1. Vorrichtung zum Behältertransport mit einer rotierenden Einlaufscheibe (4), die einen Behälter (9) an seinem oberen Mündungsbereich erfasst, wobei eine zusätzliche mitrotierende Führungseinrichtung (11) vorgesehen ist, die auf den Behälter (9) in seinem seitlichen und/oder unteren Bereich wirkt und die Führungseinrichtung (11) zur Führung und/oder Stützung des Behälters (9) ausgebildet Ist, **dadurch gekennzeichnet, dass** die Führungseinrichtung (11) einen Boden (13) aufweist, mittels welchem ein in Bezug auf die Vorrichtung zum Behältertransport radial innen liegender Bodenbereich des Behälters (9) erfassbar ist.

2. Vorrichtung nach Anspruch 1, **dadurch gekennzeichnet, dass** die Führungseinrichtung (11) einen Spurkranz (12) aufweist.

3. Vorrichtung nach Anspruch 1 oder einem der folgenden, **dadurch gekennzeichnet, dass** die Führungseinrichtung (11) zum Antrieb des Behälters (9) ausgebildet Ist.

4. Vorrichtung nach Anspruch 1 oder einem der folgenden, **dadurch gekennzeichnet, dass** die Führungseinrichtung (11) zur Sicherung des Behälters (9) gegen das Herausfallen aus der Vorrichtung ausgebildet ist.

5. Vorrichtung nach Anspruch 1 oder einem der folgenden, **dadurch gekennzeichnet, dass** die Führungseinrichtung (11) zur Aufrichtung des Behälters (9) aus einer Schräglage ausgebildet ist.

6. Vorrichtung nach Anspruch 1 oder einem der folgenden, **dadurch gekennzeichnet, dass** die Führungseinrichtung (11) den Behälter (9) an seinem seitlich unteren Bereich erfasst.

7. Vorrichtung nach Anspruch 1 oder einem der folgenden, **dadurch gekennzeichnet, dass** die Führungseinrichtung (11) über Stehbolzen (14) mit der Einlaufscheibe (4) verbunden ist.

8. Vorrichtung nach Anspruch 1 oder einem der folgenden, **dadurch gekennzeichnet, dass** die Führungseinrichtung (11) in ihrer Höhe und/oder ihrem Durchmesser verstellbar ausgebildet ist.

9. Vorrichtung nach Anspruch 1 oder einem der folgenden, **dadurch gekennzeichnet, dass** als Behälter (9) PET-Flaschen vorgesehen sind.

## Claims

1. Device for conveying containers, said device having a rotating infeed disc (4), which grasps a container (9) at it upper mouth region, wherein there is provided an additional guide device (11) that rotates at the same time and acts on the container (9) in its lateral and/or lower region and the guide device (11) is realized for guiding and/or supporting the container (9), **characterized in that** the guide device (11) includes a bottom (13), by means of which, with reference to the device for conveying containers, a radially inner bottom region of the container (9) is graspable.

2. Device according to Claim 1, **characterized in that** the guide device (11) includes a wheel flange (12).

3. Device according to Claim 1 or one of the following claims, **characterized in that** the guide device (11) is realized for driving the container (9).

4. Device according to Claim 1 or one of the following claims, **characterized in that** the guide device (11) is realized for securing the container (9) against falling out of the device.

5. Device according to Claim 1 or one of the following claims, **characterized in that** the guide device (11) is realized for setting the container (9) upright from an inclined position.

6. Device according to Claim 1 or one of the following claims, **characterized in that** the guide device (11) grasps the container (9) at its laterally lower region.

7. Device according to Claim 1 or one of the following claims, **characterized in that** the guide device (11) is connected to the infeed disc (4) via stud bolts (14).

8. Device according to Claim 1 or one of the following claims, **characterized in that** the height and/or the diameter of the guide device (11) is realized so as to be adjustable.

9. Device according to Claim 1 or one of the following claims, **characterized in that** PET bottles are provided as containers (9).

## Revendications

1. Dispositif pour le transport de récipients, comportant un disque d'admission (4) rotatif, qui saisit un récipient (9) au niveau de sa bouche supérieure, sachant qu'il est prévu un dispositif de guidage (11) supplémentaire entraîné conjointement en rotation étant prévu, qui agit sur le récipient (9) dans sa zone latérale et/ou inférieure, et ledit dispositif de guidage (11) est réalisé pour guider et/ou supporter le récipient (9), **caractérisé en ce que** le dispositif de guidage (11) comporte un fond (13), au moyen duquel peut être saisie la zone du fond du récipient (9), située radialement vers l'intérieur par rapport au dispositif pour le transport des récipients.

2. Dispositif selon la revendication 1, **caractérisé en ce que** le dispositif de guidage (11) comporte un rebord (12).

3. Dispositif selon la revendication 1 ou l'une quelconque des revendications suivantes, **caractérisé en ce que** le dispositif de guidage (11) est réalisé pour l'entraînement du récipient (9).

4. Dispositif selon la revendication 1 ou l'une quelconque des revendications suivantes, **caractérisé en ce que** le dispositif de guidage (11) est réalisé pour immobiliser le récipient (9) afin de l'empêcher de tomber hors du dispositif.

5. Dispositif selon la revendication 1 ou l'une quelconque des revendications suivantes, **caractérisé en ce que** le dispositif de guidage (11) est réalisé pour redresser le récipient (9) hors d'une position inclinée.

6. Dispositif selon la revendication 1 ou l'une quelconque des revendications suivantes, **caractérisé en ce que** le dispositif de guidage (11) saisit le récipient (9) dans sa zone latéralement inférieure.

7. Dispositif selon la revendication 1 ou l'une quelconque des revendications suivantes, **caractérisé en ce que** le dispositif de guidage (11) est relié au disque d'admission (4) par des boulons d'entretoisement (14).

8. Dispositif selon la revendication 1 ou l'une quelconque des revendications suivantes, **caractérisé en ce que** le dispositif de guidage (11) est réalisé de manière réglable en hauteur et/ou en diamètre.

9. Dispositif selon la revendication 1 ou l'une quelconque des revendications suivantes, **caractérisé en ce que** les récipients (9) prévus sont des bouteilles en PET.
